# EUROPEAN PATENT APPLICATION

(11) **EP 1 638 054 A1**
(43) Date of publication of application: **22.03.2006**
(21) Application number: 05108050.5
(22) Date of filing: 02.09.2005
(51) Int. Cl.: G07C 3/00, G05B 19/042

(54) **Method for detecting and managing faults, particularly for industrial machines**

(30) Priority: 21.09.2004 IT BO20040583
(71) Applicant: Logomat S.R.L., 40065 Pianoro (IT)
(72) Inventor: SIMONI, Gian Luca, 40068, SAN LAZZARO DI SAVENA BO (IT)
(74) Representative: Modiano, Micaela Nadia

(57) **Abstract**

A method for detecting and managing faults, particularly for industrial machines (1) comprising the steps of detecting the faulty component by way of a plurality of sensors (2) distributed on the machine (1), detecting all the operating units (3) of the machine (1) that during the operation of the machine (1) interact even indirectly with the faulty component, determining the instant when each one of the units (3) interacts, even indirectly, with the faulty component, disabling each one of the units (3) in the respective determined instant of interaction, making the machine (1) operate at a reduced rate, with all the units (3) that interact with the faulty component disabled, in the respective instant of interaction, until the fault is suppressed.

## Description

The present invention relates to a method for detecting and managing faults, particularly for industrial machines.

Many of the plants normally used for production or packaging (but also other processing plants) comprise a plurality of mutually similar units, which operate in a battery (normally arranged in series).

One might consider, for example, an industrial machine for packaging a product that is already prepackaged within a blister package.

The blisters are taken from a magazine and made to slide on a conveyor belt, while a second unit picks up from the corresponding storage area the boxes, which have not yet been formed, and folds them appropriately on respective forming units. The information leaflets of the medicine are taken from an additional storage area.

In practice, the cycle entails that as soon the box has been formed, pushers introduce in said box one or more blisters and the corresponding information leaflet.

This machine therefore comprises a plurality of units for picking up the blisters, a plurality of units for picking up the cardboard boxes and a set of units for picking up the information leaflets, as well as additional individual units, which mutually cooperate in order to perform the other required operations.

If any one of these units becomes damaged or breaks, the entire machine malfunctions: failure of one of the pick-up units to operate, as required for correct packaging, would lead to the production of incomplete products or, worse still, would block the machine.

The failure of one of the cited units therefore makes it necessary to take the plant out of service. The damage arising from taking it out of service is linked to the fact that packaging machines generally have an extremely high productivity, and a few days of downtime may entail substantial economic losses.

What has been described for a packaging machine is true also in all industrial sectors in which each operation is performed by respective elementary units, each operation being correlated to the others during the production process, all the elementary units therefore cooperating in the process.

The aim of the present invention is to obviate the cited drawbacks and to meet the mentioned requirements, by providing a method for detecting and managing faults particularly for industrial machines that allows operation even when one or more of the elementary component units is even only partially faulty.

Within this aim, an object of the present invention is to provide a structure that is simple, relatively easy to provide in practice, safe in use, effective in operation, and has a relatively low cost.

This aim and this and other objects that will become better apparent hereinafter are achieved by the present method for detecting and managing faults, particularly for industrial machines, comprising the steps of:
- detecting the faulty component by means of a plurality of sensors distributed on said machine
- detecting all the operating units of the machine that during the operation of said machine interact even indirectly with the faulty component,
- determining the instant when each one of said units interacts, even indirectly, with said faulty component,
- disabling each one of said units in the respective determined instant of interaction,
- making the machine operate at a reduced rate, with all the units that interact with the faulty component disabled, in the respective instant of interaction, until the fault is suppressed.

Further characteristics and advantages of the invention will become better apparent from the following detailed description of a preferred but not exclusive embodiment of a method for detecting and managing faults particularly for industrial machines, illustrated by way of non-limiting example in the accompanying drawings, wherein:

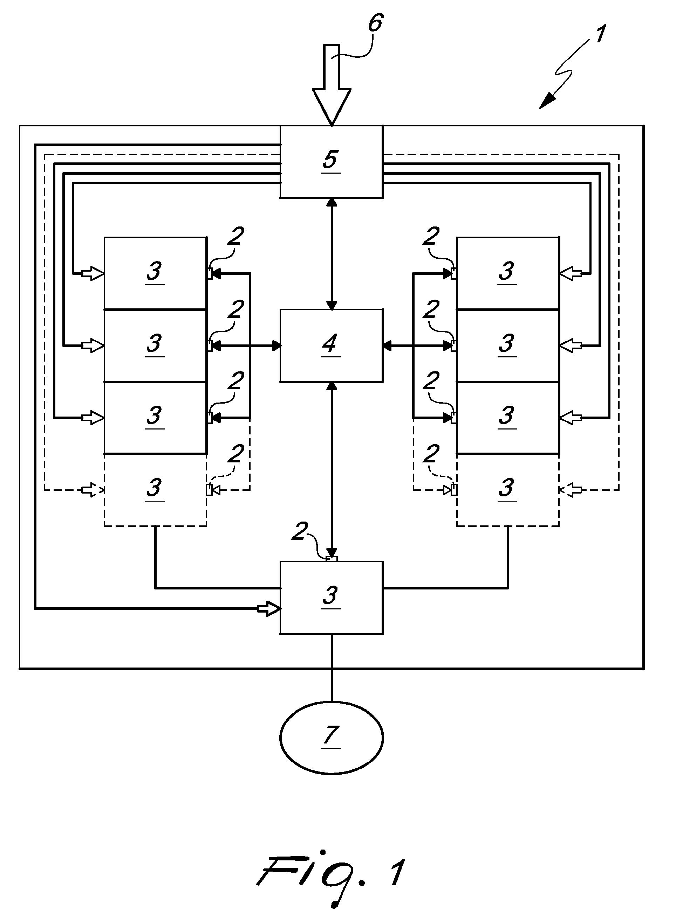

Figure 1 is a functional diagram of a machine that applies the method according to the invention.

With reference to the figure, the reference numeral 1 generally designates a machine that applies the method for detecting and managing faults particularly for industrial machines. The constructive solution illustrated in Figure 1 is intended as a purely explanatory diagram, since the machine can also be an extremely complex plant constituted by a plurality of elementary assemblies, even connected in mutually interacting conditions.

The method for detecting and managing faults particularly for industrial machines consists in detecting, by means of a plurality of sensors 2 distributed on the machine 1 the faulty component, which may be an entire operating unit 3 or a single component thereof. It is evident that if it is necessary to detect faults also in the individual components of a unit 3, it is necessary to install on said unit a number of sensors 2 equal to the number of components to be monitored.

It is further necessary to identify all the units 3 that during the operation of the machine 1 interact, even indirectly, with the faulty component: in practice, during the processing cycle, if the faulty component provides an intermediate article starting from the raw material that it receives from another unit 3, said intermediate article requiring completion in a final unit 3, it is necessary to identify all the units 3, downstream and upstream of the faulty component, that interact with said faulty component.

Clearly, these interacting units 3 might not be dependent exclusively on the faulty component: it is often necessary also to identify the instant when each one of these units 3 interacts, even indirectly, with the faulty component.

Once the spatial and temporal coordinates that identify uniquely the units 3 at the instant of interaction have been established, it is necessary to disable each one of said units at the respective identified instant of interaction.

In practice, in this manner it is possible to make the machine 1 operate at a reduced rate, i.e., so that all the units 3 that interact with the faulty component are disabled at the respective instant of interaction until the fault is suppressed by the personnel assigned to maintenance. In this manner, all the economic losses caused by a machine downtime 1 caused by a fault that is present only in some of its parts are eliminated.

It should be noted that even if there are two (or more) faulty components, it is possible to reiterate all the operations for each one of the faulty components: as long as it is possible to exclude the units 3 that interact, ensuring in any case operation of the machine 1 at a reduced rate, the method can be applied.

The machine that performs the method is provided in such a manner that the sensors 2 are distributed at each elementary operating unit 3 in order to detect the correct operation thereof or of a part thereof.

The signal emitted by the sensors 2 feeds a processor 4, optionally the same one already present in the machine 1 and designed to control it, which is suitable to manage and control all the elementary units 3 that constitute the machine 1 by driving a controlled power supply 5, which is dependent thereon and is interposed between the power supply network 6 and the individual units 3.

Generally, the industrial machines 1 suitable for the application of the method according to the invention are packaging plants, which receive the raw material (understood as the product to be packaged, the material with which the package is to be manufactured, etc) and from which the finished product 7 exits.

These machines therefore comprise elementary units 3 which can be units for feeding the raw material being processed (which are linked to magazines of various kinds), conveyance devices (such as conveyor belts or racks or rollers, etc), forming apparatuses (designed to shape the raw cutout so as to make it become the box-like package for the product) or apparatuses suitable to functionally associate products that reach it from other elementary units 3 (such as for example apparatuses that insert the product within the box-like package).

The operation of the invention is as follows: when the machine 1 is operating, the sensors 2 communicate constantly with the processor 4, reporting the status of the unit 3 (or of the part of the unit 3) with which they are associated.

If a fault occurs, the processor 4 detects its signal and determines all the units 3 that interact, during the normal operation of the machine 1, with the faulty component, also identifying the instant when said interaction will occur.

The processor 4 then drives the controlled power supply 5 so that it removes power (electrical, pneumatic or other) from all the units 3 that interact with the faulty component exactly at the instant of interaction.

In this manner, downtime of the machine 1 is avoided; it should be noted that for packaging machines such as for example the ones used for medicines, productivity is very high and so is the cost of the final product. Avoiding downtime of the machine 1, by operating at a reduced rate, allows to reduce considerably the economic losses associated with it while waiting to be able to repair or replace the faulty component.

It has thus been shown that the invention achieves the intended aim and object.

The invention thus conceived is susceptible of numerous modifications and variations, all of which are within the scope of the inventive concept, as defined in the appended claims.

All the details may further be replaced with other technically equivalent ones.

In the described embodiments, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and the dimensions, may be any according to requirements without thereby abandoning the protective scope of the appended claims.

The disclosures in Italian Patent Application No. BO2004A000583 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for detecting and managing faults, particularly for industrial machines (1), comprising the steps of:
- detecting the faulty component by means of a plurality of sensors (2) distributed on said machine (1),
- detecting all the operating units (3) of the machine (1) that during the operation of said machine (1) interact even indirectly with the faulty component,
- determining the instant when each one of said units (3) interacts, even indirectly, with said faulty component,
- disabling each one of said units (3) in the respective determined instant of interaction,
- making the machine (1) operate at a reduced rate, with all the units (3) that interact with the faulty component disabled, in the respective instant of interaction, until the fault is suppressed.

2. The method according to claim 1, **characterized in that** if the faulty components are at least two, it provides for the reiteration of all of said operations for each one of said faulty components.

3. A machine that performs the method according to claim 1, **characterized in that** said sensors (2) are distributed at each elementary operating unit (3) in order to detect the correct operation of at least a part thereof.

4. The machine according to claim 3, **characterized in that** the signal emitted by said sensors (2) feeds a processor (4), optionally already installed on the machine (1), which is suitable to manage and control all the elementary units (3) that constitute said machine (1).

5. The machine according to one or more of the preceding claims, **characterized in that** said elementary unit (3) is a conveyance device.

6. The machine according to one or more of the preceding claims, **characterized in that** said elementary unit (3) is a forming apparatus.

7. The machine according to one or more of the preceding claims, **characterized in that** said elementary unit (3) is a unit for supplying the raw material being processed.

8. The machine according to one or more of the preceding claims, **characterized in that** said elementary unit (3) is an apparatus suitable to functionally associate products that reach it from other elementary units (3).
